# FASCICULE DE BREVET EUROPEEN

(11) **EP 0 323 313 B1**
(45) Date de publication et mention de la délivrance du brevet: **01.12.1993**
(21) Numéro de dépôt: 88403246.7
(22) Date de dépôt: 20.12.1988
(51) Int. Cl.: C08J 3/20, C04B 26/10, C08L 61/00

(54) **Matière à mouler pour la fabrication de matériaux composites, et son procédé de préparation**
Formbarer Stoff für die Herstellung von Verbundmaterialien und seine Herstellung
Mouldable material for making composite products, and process for its production

(30) Priorité: 23.12.1987 FR 8718022
(43) Date de publication de la demande: 05.07.1989
(73) Titulaire: AEROSPATIALE Société Nationale Industrielle, 75781 Paris Cédex 16 (FR)
(72) Inventeur: Ferrier, Christiane née Pegot, F-91430 Igny (FR); Refait, Michel, F-18000 Bourges (FR); Rippes, Christian, F-18000 Bourges (FR)
(74) Mandataire: Lepeudry-Gautherat, Thérèse

(56) Documents cités:
- DE-A- 3 533 625
- GB-A- 815 302
- US-A- 4 112 036

## Description

La présente invention concerne une nouvelle matière à mouler utilisable pour la fabrication de matériaux composites hautes performances notamment ceux présentant des caractéristiques mécaniques et thermiques élevées comprenant, en poids, de 85 à 40 % de charge de renforcement thermique et mécanique à hautes températures et de 15 à 60 % de résine solide thermodurcissable, organique ou organosilicique, ainsi qu'un agent de réticulation solide dans une proportion en poids comprise entre 6 et 15 % par rapport à la résine. L'invention concerne également un procédé pour préparer cette matière à mouler et l'application de celle-ci dans la fabrication des matériaux composites.

Les matières à mouler de ce type sont utilisées notamment dans la fabrication de matériaux composites pour moteurs à poudre lesquels doivent présenter des caractéristiques mécaniques déterminées, en particulier de traction et de flexion, et certaines propriétés thermiques, par exemple relatives au taux de sublimation et à la résistivité thermique. Pour ce type d'application les liants peuvent être des résines solides thermodurcissables, organiques ou organosiliciques telles que les résines phénoliques, les polyimides, les polystyrilpyridines ou les silicones et les particules de charge constituées par exemple de coton, de Kevlar®, de verre, de matières silocoalumineuses de silice, d'alumine de carbone ou de carbure de silicium.

Actuellement, et depuis déjà environ une vingtaine d'années, on effectue la préparation de telles matières à mouler selon des procédés par voie humide appelés ici "procédés à solvant" comportant plusieurs étapes. On prépare d'abord par dissolution dans un solvant d'une poudre de résine solide et d'une poudre d'un agent de réticulation ou d'une poudre de résine solide comportant un agent de réticulation incorporé, une solution de résine et d'agent de réticulation ; on plonge dans cette solution les particules de charge, fibreuses ou pulvérulentes, de façon à les mouiller de cette solution. Puis on chauffe sous vide le mélange préimprégné pour éliminer le solvant et obtenir un mélange solide dans lequel les particules de charge sont imprégnées d'un mélange homogène de résine et d'agent de réticulation. Enfin on concasse et on broie ce dernier de façon à le rendre manipulable et propre à être moulé.

Ces procédés à solvant présentent de nombreux inconvénients . En effet la durée du cycle de fabrication est importante habituellement de l'ordre de 48 heures. En outre une grande quantité de solvant est nécessaire pour mettre en solution la résine et l'agent réticulant, égale par exemple dans le cas d une résine phénolique à la masse de cette dernière. Ce solvant doit ensuite être éliminé par chauffage sous vide d'où une dépense d'énergie des risques d inflammation et d'explosion ainsi qu'un mûrissement aléatoire de la résine provoqué par cette étape thermique lequel rend nécessaire un contrôle rigoureux des conditions opératoires de cette dernière.

Il existe donc un besoin pour une matière à mouler préparée selon un procédé plus simple à mettre en oeuvre et plus économique.

Pour que le matériau composite moulé possède des caractéristiques mécaniques et thermiques convenables, il est nécessaire qu'il présente une grande régularité dans la répartition des particules de charge et du liant durci. Cette condition suppose pour la matière à mouler, une distribution régulière de la résine autour des particules de charge ainsi que de l'agent de réticulation dans la résine. Or ces trois constituants sont des solides de densité différente et la charge est insoluble. Le seul moyen possible pour parvenir à la répartition régulière souhaitée semblait donc être un procédé du type de ceux déjà décrits, comportant une étape d'imprégnation des particules de charge par une solution de la résine et de l'agent de réticulation.

La Demanderesse a maintenant découvert à sa grande surprise qu'il est possible de préparer une matière à mouler utilisable pour la fabrication de matériaux composites hautes performances par mélange convenable "à sec" sans chauffage ni compression des particules de charge et de la résine sous forme de poudre.

Le document GB-A-815 302 concerne un procédé de fabrication d'une composition moulable thermodurcissable et la composition ainsi obtenue. Celle-ci est essentiellement constituée d'une résine thermodurcissable, ou d'un mélange de telles résines, et d'une charge. Pour préparer une telle composition, on mélange intimement la résine finement broyée avec la charge et des plastifiants usuels, ainsi que, si nécessaire, d'autres additifs, on introduit une quantité appropriée d'un agent mouillant volatil et on mélange en comprimant jusqu'à évaporation du solvant.

Le procédé est donc complexe. De plus, l'agent mouillant qui joue également le rôle de solvant de la résine provoque, au cours de la compression, un véritable "collage" des particules de résine sur la charge.

Le document US-A-4,112,036 concerne la préparation de composites renforcés par du mica. Il décrit, en tant qu'étapes de préparation de la composition thermodurcissable utilisée pour fabriquer ces composites, a) le mélange, sous forme liquide, d'un polyester thermodurcissable et d'un agent de réticulation ; b) la solidification du mélange liquide obtenu ; c) le broyage du mélange solidifié obtenu pour donner une poudre sèche ; et d) le mélange à sec de cette poudre avec des particules de mica pour revêtir ces particules avec la poudre sèche.

Ce procédé en quatre étapes est donc également complexe.

Par ailleurs l'obtention d'une composition à mouler selon ce document suppose la mise en oeuvre d'étapes supplémentaires de ramollissement et de compactage (étapes e) à g) du procédé) après le mélange à sec de la composition thermodurcissable obtenue dans les étapes a) à d) avec des particules de mica.

L'invention concerne donc une nouvelle matière à mouler sèche utilisable pour la fabrication de matériaux composites à caractéristiques mécaniques et thermiques élevées, comprenant en poids de 85 ci' de 85 à 40 % de charge de renforcement de la tenue thermique et mécanique à hautes températures et de 15 à 60 % de résine solide thermodurcissable, organique ou organosilicique, ainsi qu'un agent de réticulation dans une proportion en poids comprise entre 6 et 15 % par rapport à la résine, caractérisée en ce qu'elle comprend des particules de ladite charge entourées de grains de ladite résine qui ont été fixes par simple mélange à sec des constituants, mélange dans lequel la dimension maximale des grains de résine thermodurcissable est inférieure à 0,3 mm, la dimension maximale des grains d'agent de réticulation, lorsque celui-ci n'est pas inclus dans les grains de résine, est inferieure à 0,3 mm et la taille moyenne des particules de charge est très supérieure à celle des grains de résine.

L'agent de réticulation peut être inclus dans la résine. Dans le cas contraire ledit mélange comprend également des grains dudit agent de réticulation répartis de façon à être en mesure de réticuler la résine.

La matière a mouler obtenue selon l'invention se caractérise par une excellente stabilité au stockage et à la manipulation la répartition des grains de résine (et éventuellement d'agent de réticulation) autour de la charge restant suffisamment constante.

On apprécie que la dimension maximale des grains de résine soit inférieure à 0,3 mm et, en particulier, à 0,2 mm. Il en est de même pour les grains d'agent de réticulation lorsque celui-ci n'est pas inclus dans la résine.

La résine solide thermodurcissable, organique ou organosilicique est de préférence choisie dans l'ensemble constitué par les polymides, les polystyryl-pyridines, les silicones et les résines phénoliques. D'excellents résultats ont en particulier été obtenus avec les résines phénoliques.

La charge est avantageusement constituée de coton, de polyamides aromatiques (tels que le Kevlar^{R}), de verre d'une matière silicolumineuse de silice d'alumine de carbone ou de carbure de silicium. Le mica et la silice sont particulièrement appréciés.

La taille moyenne des particules de charge est de préférence très supérieure à celle des grains de résine.

Les particules de charge peuvent avoir n'importe quelle forme. Dans le cas de fibres celles-ci ont en général une longueur comprise entre 2 et 20 mm et un diamètre compris entre 1 et 10 µm.

Afin de faciliter les manipulations ultérieures et en particulier éviter la perte de particules de résine voltigeantes, on préfère en général ajouter à la matière à mouler obtenue par le mélange à sec un peu de solvant en une quantité comprise entre 4 et 12 % de la masse de la résine.

L'invention concerne également un procédé pour obtenir cette matière à mouler caractérisé en ce qu'il comprend l'opération de mélange à sec,sans chauffage ni compression d'une poudre de résine et de particules de ladite charge.

On peut avantageusement effectuer cette opération dans un mélangeur à pale planétaire à température ambiante, après avoir ajusté la taille des particules de certains des constituants de la matière à mouler.

Ce procédé présente de nombreux avantages par rapport aux procédés à solvant. Il supprime en effet les étapes suivantes : dissolution de la résine séchage du mélange préimprégné et broyage du mélange préimprégné séché. Il permet ainsi de supprimer au moins un poste de travail et de réduire considérablement la durée du cycle de fabrication laquelle est de l'ordre d'une heure au lieu d'environ 48 heures dans les procédés à solvant. De plus, cette suppression évite la consommation de solvants et leur manipulation ceux-ci n'étant pas recyclables dans des conditions économiquement avantageuses dans les procédés à solvant. Enfin, ce procédé ne comporte plus d'étape thermique nécessitant , outre une dépense d'énergie un contrôle rigoureux des conditions opératoires pour éviter le mûrissement aléatoire de la résine. Il peut donc être mis en oeuvre dans un appareillage simple, utilisé avec souplesse. Les économies réalisées sont donc considérables. Enfin comme indiqué ci-dessus la matière obtenue est très stable et peut facilement être stockée et transportée.

L'invention concerne également l'application de la matière à mouler définie précédemment dans un procédé de fabrication de matériaux composites. Cette matière à mouler de structure très différente de celle des matières à mouler obtenues par les procédés à solvant est susceptible d'être moulée dans les mêmes conditions que ces dernières.

L'invention et les avantages qu'elle présente par rapport à l'état de la technique seront mieux compris à la lecture des exemples et exemples comparatifs ci-après.

### EXEMPLE 1 :

### Préparation selon l'invention d'une matière à mouler comprenant du mica et de la résine phénolique.

On effectue toutes les opérations de préparation de la matière à mouler à température ambiante.

On broie très finement pendant environ 45 minutes séparément 10 kg de résine phénolique Novolaque® et 1 kg d'hexaméthylènetétramine On fait passer chacun de ces composants à travers un tamis de 0,2 mm. Puis on les verse dans un mélangeur industriel à pale planétaire et on ajoute au mélange 0 2 kg de stéarate de calcium en poudre fine. On met en route et fait fonctionner le mélangeur à 60 tours/minute pendant 10 minutes avant de laisser reposer le mélange 5 minutes.

On verse ensuite dans le mélangeur 10 kg de mica suzorite sous forme de paillettes de diamètre compris entre 1 et 3 mm et d'épaisseur d'environ 100 µm. On fait fonctionner le mélangeur à 60 tours/minute pendant 5 minutes.

On obtient ainsi une matière à mouler selon l'invention, appelée ici matière à mouler n° 1, dont on prélève des échantillons.

On applique un vide de 0,4 bar on injecte 1 l (soit environ 800 g) d'acetone, et on fait fonctionner le mélangeur à 40 tours/minute pendant 5 minutes. On laisse remonter la pression à 0,95 bar et on mélange à 60 tours/minute pendant 15 minutes. On arrête le mélangeur et on le laisse revenir à la pression ambiante.

On obtient ainsi une matière à mouler selon l'invention, appelée ici matière à mouler n° 2, dont on prélève des échantillons.

### EXEMPLE COMPARATIF 1 :

### Préparation selon un procédé à solvant d'une matière à mouler comprenant du mica et de la résine phénolique.

On broie très finement pendant environ 45 minutes 10 kg de résine phénolique Novolaque® et 1 kg d'hexaméthylènetétramine. On verse ensuite ces poudres dans un mélangeur industriel, préalablement chargé de 10 litres (soit environ 8 kg) d'alcool éthylique et on fait fonctionner le mélangeur à 60 tours/minute, pendant le temps nécessaire pour que celles-ci soient complètement dissoutes soit environ 4 heures.

On verse ensuite dans le mélangeur 10 kg de mica suzorite sous forme de paillettes de diamètre compris entre 1 et 3 mm et d'épaisseur d'environ 100 µm ainsi que 0,2 kg de stéarate de calcium en poudre fine. On fait fonctionner le mélangeur à 60 tours/minute pendant 5 minutes.

Le mélange ainsi obtenu est mis en étuve où on applique un vide de 0,1 bar et on chauffe à une température d'environ 40°C pendant la durée nécessaire pour éliminer le solvant, soit environ 36 heures. On met le produit sec dans un dispositif de broyage pendant 5 minutes.

On obtient ainsi une matière à mouler classique dans laquelle les particules de charge sont imprégnées de résine et d'agent de réticulation appelée ici matière à mouler n° 3, dont on prélève des échantillons.

On fabrique des éprouvettes en matériau composite de différentes tailles en vue d'essais mécaniques et thermiques, par moulage à une température de 165°C et sous une pression de 400 bars, des différents échantillons prélevés des matières à mouler n° 1, n° 2 et n° 3.

Les essais mécaniques sont des essais de traction et de flexion effectués respectivement selon les normes AFNOR NFT 51 034 et AFNOR NFT 51 001. Les résultats obtenus pour les échantillons de chacune des différentes masses à mouler sont identiques aux erreurs expérimentales près. Les valeurs mesurées sont d'environ 30 MPa pour la charge à la rupture en traction et 90 MPa pour la charge à la rupture en flexion.

Les essais thermiques comprennent des analyses thermogravimétiques des éprouvettes dans un intervalle de température s'étendant de 200 à 1000°C. La variation et la valeur du taux de dégradation dans cet intervalle sont sensiblement égaux pour les échantillons de chacune des différentes matières à mouler.

On effectue également des essais dits "essais plasma" consistant à exposer des éprouvettes, pendant une durée qui peut varier de 10 secondes à 5 minutes dans la flamme d'une torche dont la température peut atteindre 1500 à 2000°C. On mesure le taux d'ablation (ou taux de sublimation) ainsi que la température de la partie froide de l éprouvette. On mesure ainsi le transfert thermique dans le matériau composite. Les mesures conduisent à des valeurs identiques pour les échantillons de chacune des différentes matières à mouler.

Les résultats des essais mécaniques et thermiques sont donc rigoureusement identiques aux erreurs expérimentales près pour les éprouvettes en matériau composite obtenues à partir de chacune des matières à mouler n° 1. n° 2 et n° 3.

### EXEMPLE 2 :

### Préparation selon l'invention d'une matière à mouler comprenant de la silice et une résine phénolique.

On effectue toutes les opérations de préparation de la matière à mouler à température ambiante.

On broie très finement pendant environ 45 minutes séparément 10 kg de résine phénolique Novolaque® et 1 kg d'hexaméthylènetétramine. On fait passer chacun de ces composants à travers un tamis de 0,2 mm. Puis on les verse dans un mélangeur industriel à pale planétaire et on ajoute au mélange 0 2 kg de stéarate de calcium en poudre fine. On met en route et fait fonctionner le mélangeur à 60 tours/minute pendant 15 minutes.

On verse ensuite dans le mélangeur 12,220 kg de silice sous forme de fibres de diamètre voisin de 6 µm et de longueur 6 mm. On mélange à 60 tours pendant 5 minutes.

On obtient ainsi une matière à mouler, selon l'invention, appelée ici matière à mouler n° 4, dont on prélève des échantillons.

On applique un vide de 0,5 bar , on injecte 1 l (soit environ 800 g) d'acétone et on fait fonctionner le mélangeur à 60 tours/minute pendant 10 minutes. On laisse remonter la pression à 0,95 bar et on mélange à 60 tours/minute pendant 10 minutes. On arrête le mélangeur et on le laisse revenir à la pression ambiante.

On obtient ainsi une matière à mouler selon l'invention appelée matière à mouler n° 5 dont on prélève des échantillons

### EXEMPLE COMPARATIF 2 :

### Préparation selon un procédé à solvant d'une matière à mouler comprenant de la silice et une résine phénolique.

On broie très finement pendant environ 45 minutes séparément 10 kg de résine phénolique Novolaque® et 1 kg d'hexaméthylènetétramine. On fait passer chacun de ces composants à travers un tamis de 0,2 mm. On verse ensuite ces poudres dans un mélangeur industriel, préalablement chargé de 10 litres (soit environ 8 kg) d'alcool éthylique et on fait fonctionner le mélangeur à 60 tours/minute pendant le temps nécessaire pour que celles-ci soient complètement dissoutes, soit environ 4 heures.

On verse ensuite dans le mélangeur 12,220 kg de silice sous forme de fibres de diamètre voisin de 6 µm et de longueur 6 mm ainsi que 0,2 kg de stéarate de calcium. On fait fonctionner le mélangeur à 60 tours/minute pendant 5 minutes.

Le mélange ainsi obtenu est mis en étuve où on applique un vide de 0,1 bar et on chauffe à une température d'environ 40°C pendant la durée nécessaire pour éliminer le solvant soit environ 36 heures. On met le produit sec dans un dispositif de broyage pendant 5 minutes.

On obtient ainsi une matière à mouler classique dans laquelle les particules de charge sont imprégnées de résine et d'agent de réticulation, appelée ici matière à mouler n° 6, dont on prélève des échantillons.

On fabrique des éprouvettes en matériau composite de différentes tailles en vue d'essais mécaniques et thermiques, par moulage à une température de 165°C et sous une pression de 400 bars, des différents échantillons prélevés des matières à mouler n° 4, n° 5 et n° 6.

Les essais mécaniques et thermiques effectués sont les mêmes que les essais mentionnés ci-dessus pour les éprouvettes provenant des matières à mouler n°1, n°2 et n°3. Les valeurs mesurées sont d environ 90 MPa pour la charge à la rupture en traction et 200 MPa de charge pour la rupture en flexion.

Les résultats de ces différents essais sont rigoureusement identiques aux erreurs expérimentales près, pour les éprouvettes en matériau composite obtenues à partir de chacune des matières à mouler n°4 n°5 et n°6.

### EXEMPLE 3 :

### Préparation selon l'invention d'une matière à mouler à base de fibres de carbone et de résine phénolique.

On broie très finement pendant environ 45 minutes séparément 3 kg de résine phénolique Novolaque® 270 g d'hexaméthylènetétramine et 53 g de stéarate de calcium. On fait passer chacun de ces composants à travers un tamis de 0,2 mm. Puis on les verse dans un mélangeur à pale planétaire et on ajoute au mélange 60 g de stéarate de calcium en poudre fine. On met en route et fait fonctionner le mélangeur à 40 tours/minute pendant 15 minutes.

On prélève 366 g du mélange obtenu qu'on transfère dans un mélangeur de même type mais de taille plus petite, on ajoute 270 g de fibres de carbone de diamètre voisin de 10 µm et de longueur 6 mm et on fait fonctionner le mélangeur à 40 tours/minute pendant 15 minutes.

On prélève un échantillon du mélange obtenu qu'on transforme, par moulage à une température de 170°C et sous une pression de 400 bars, en un objet moulé de densité 1,46.

Les résultats expérimentaux ci-dessus montrent que les matières à mouler selon l invention obtenues selon un procédé moins long plus simple à mettre en oeuvre et plus économique que les procédés à solvant forment après moulage des matériaux composites présentant des propriétés mécaniques et thermiques identiques à celles des matériaux composites fabriqués à partir des matières à mouler classiques obtenues selon un procédé à solvant.

Le procédé de l'invention peut donc avantageusement remplacer les procédés à solvant pour la préparation des matières à mouler utilisées dans la fabrication des matériaux composites, en particulier ceux présentant des caractéristiques mécaniques et thermiques déterminées.

## Revendications

1. Matière à mouler sèche utilisable pour la fabrication de matériaux composites à caractéristiques mécaniques et thermiques élevées, comprenant en poids de 85 à 40 % de charge de renforcement de la tenue thermique et mécanique à hautes températures et de 15 à 60 % de résine solide thermodurcissable, organique ou organosilicique, ainsi qu'un agent de réticulation dans une proportion en poids comprise entre 6 et 15 % par rapport à la résine, caractérisée en ce qu'elle comprend des particules de ladite charge entourées de grains de ladite résine qui ont été fixés par simple mélange à sec des constituants, mélange dans lequel la dimension maximale des grains de résine thermodurcissable est inférieure à 0,3 mm, la dimension maximale des grains d'agent de réticulation, lorsque celui-ci n est pas inclus dans les grains de résine, est inférieure à 0,3 mm et la taille moyenne des particules de charge est très supérieure à celle des grains de résine.

2. Matière à mouler selon la revendication 1, caractérisée en ce que l'agent de réticulation est inclus dans les grains de résine.

3. Matière à mouler selon la revendication 1, caractérisée en ce que les particules de charge sont également entourées de grains dudit agent de réticulation.

4. Matière à mouler selon l'une quelconque des revendications 1 à 3, caractérisée en ce que la dimension maximale des grains de résine est inférieure à 0,2 mm.

5. Matière à mouler selon la revendication 3 ou 4, caractérisée en ce que la dimension maximale des grains de l'agent de réticulation est inférieure à 0,2 mm.

6. Matière à mouler selon l'une quelconque des revendications précédentes, caractérisée en ce que la résine est choisie dans l'ensemble constitué par les résines phénoliques, des polyimides, les polystyrylpyridines et les silicones.

7. Matière à mouler selon la revendication 6, caractérisée en ce que la résine est une résine phénolique.

8. Matière à mouler selon l'une quelconque des revendications précédentes, caractérisée en ce que la charge est choisie dans l'ensemble constitué par le coton, les polyamides aromatiques, le verre, les matières silicoalumineuses, la silice, l'alumine, le carbone et le carbure de silicium.

9. Matière à mouler selon la revendication 8, caractérisée en ce que la charge est choisie dans l'ensemble constitué par la silice et le mica.

10. Matière à mouler selon la revendication 9, caractérisée en ce que la charge est constituée de mica suzorite sous forme de paillettes de diamètre compris entre 1 et 3 mm et d'épaisseur d'environ 100 µm.

11. Matière à mouler selon l'une quelconque des revendications 1 à 9, caractérisée en ce que les particules de charge sont fibreuses.

12. Matière à mouler selon la revendication 11, caractérisée en ce que les fibres ont une longueur comprise entre 2 et 20 mm et un diamètre compris entre 1 et 10 µm.

13. Procédé pour obtenir une matière à mouler selon l'une quelconque des revendications précédentes, caractérisé en ce qu'il comprend l'opération de mélange à sec sans chauffage ni compression d'une poudre de résine et des particules de ladite charge.

14. Procédé selon la revendication 13, caractérisé en ce qu'avant l'opération de mélange on ajuste la taille des particules de certains constituants de la matière à mouler.

15. Procédé selon la revendication 13 ou 14, caractérisé en ce qu'on effectue l'opération de mélange dans un mélangeur à pale planétaire.

16. Application d'une matière à mouler selon l'une quelconque des revendications 1 à 12, dans un procédé de fabrication de matériau composite.

## Claims

1. Dry moulding material for use in the manufacture of composite materials having high thermal and mechanical properties, comprising from 85 to 40 % by weight of reinforcing filler for the thermal and mechanical strength at high temperatures and from 15 to 60 % of organic or organosilic solid thermosetting resin, as well as a crosslinking agent in a proportion by weight of between 6 and 15 % in relation to the resin, characterised in that it comprises particles of the said filler surrounded by grains of the said resin which have been fixed by simple dry-mixing of the constituents, in which mixture the maximum dimension of the grains of thermosetting resin is lower than 0.3 mm, the maximum dimension of the grains of crosslinking agent, when that is not included in the grains of resin, is lower than 0.3 mm and the average size of the filler particles is far greater than that of the grains of resin.

2. Moulding material according to claim 1, characterised in that the crosslinking agent is included in the grains of resin.

3. Moulding material according to claim 1, characterised in that the filler particles are also surrounded by grains of the said crosslinking agent.

4. Moulding material according to any one of claims 1 to 3, characterised in that the maximum dimension of the grains of resin is lower than 0.2 mm.

5. Moulding material according to claim 3 or 4, characterised in that the maximum dimension of the grains of crosslinking agent is lower than 0.2 mm.

6. Moulding material according to any one of the preceding claims, characterised in that the resin is selected from the group consisting of phenol resins polyimides, polystyrylpyridines and silicones.

7. Moulding material according to claim 6, characterised in that the resin is a phenol resin.

8. Moulding material according to any one of the preceding claims, characterised in that the filler is selected from the group consisting of cotton, aromatic polyamides, glass, silico-aluminous materials, silica, alumina, carbon and silicon carbide.

9. Moulding material according to claim 8, characterised in that the filler is selected from the group consisting of silica and mica.

10. Moulding material according to claim 9, characterised in that the filler consists in suzorite mica in the form of flakes of a diameter of between 1 and 3 mm and of a thickness of about 100 µm.

11. Moulding material according to any one of claims 1 to 9, characterised in that the filler particles are fibrous.

12. Moulding material according to claim 11, characterised in that the fibres are of a length of between 2 and 20 mm and of a diameter of between 1 and 10 µm.

13. A process for obtaining a moulding material according to any one of the preceding claims, characterised in that it comprises the operation of dry-mixing, without heating or compression, a resin powder and particles of the said filler.

14. A process according to claim 13, characterised in that the size of the particles of some constituents of the material to be moulded is adjusted before the mixing operation.

15. A process according to claim 13 or 14, characterised in that the mixing operation is carried out in a planetary blade mixer.

16. The use of a moulding material according to any one of claims 1 to 12 in a process for the manufacture of a composite material.

## Patentansprüche

1. Trockener formbarer Stoff, verwendbar für die Herstellung von Verbundmaterialien mit gehobenen mechanischen und thermischen Eigenschaften, der 85 bis 40 Gewichtsprozent eines Füllstoffes zur Verstärkung der thermischen und mechanischen Widerstandsfähigkeit bei hohen Temperaturen und 15 bis 60 Gewichtsprozent eines durch Wärme aushärtbaren, organischen oder aus einer Organosiliziumverbindung bestehenden Festharzes, sowie ein Vernetzungmittel in einem Verhältnis zwischen 6 und 15 Gewichtsprozent in bezug auf das Harz enthält, dadurch gekennzeichnet, daß er Partikel des Füllstoffs enthält, umgeben von Körnern dem Harzes, die durch einfaches trockenes Mischen der Bestandteile fixiert worden sind, eine Mischung, in der die maximale Abmessung der Körner des durch Wärme aushärtbaren Harzes kleiner als 0,3 mm ist, die maximale Abmessung der Körner des Vernetzungmittels, falls dieses nicht in den Körnern des Harzes eingeschlossen ist kleiner als 0,3 mm ist und die mittlere Größe der Füllstoffpartikel deutlich größer als die der Körner des Harzes ist

2. Formbarer Stoff nach Anspruch 1, dadurch gekennzeichnet, daß das Vernetzungsmittel in den Körnern des Harzes eingeschlossen ist.

3. Formbarer Stoff nach Anspruch 1, dadurch gekennzeichnet, daß die Füllstoffpartikel auch von Körnern des Vernetzungszmittels umgehen sind.

4. Formbarer Stoff nach einem der Ansprüche 1 bis 3, dadurch gekennzeichnet, daß die. maximale Abmessung der Körner den Harzes kleiner als 0,2 mm ist.

5. Formbarer Stoff nach Anspruch 3 oder 4, dadurch gekennzeichnet, daß die maximale Abmessung der Körner des Vernetzungsmittels kleiner als 0,2 mm ist.

6. Formbarer Stoff nach einem der vorhergehenden Ansprüche, dadurch gekennzeichnet, daß das Harz aus der Gruppe ausgewählt ist die aus den Phenolharzen, den Polyimiden, den Polystyrylpyridinen und den Silikonen besteht.

7. Formbarer Stoff nach Anspruch 6, dadurch gekennzeichnet, daß das Harz ein Phenolharz ist.

8. Formbarer Stoff nach einem der vorhergehenden Ansprüche, dadurch gekennzeichnet, daß der Füllstoff aus der Gruppe ausgewählt ist, die aus Baumwolle, Aramiden, Glas, Tonerdesilikatmaterialien, Kieselerde, Tonerde, Kohlenstoff und Siliziumkarbid besteht.

9. Formbarer Stoff nach Anspruch 8, dadurch gekennzeichnet, daß der Füllstoff aus der Gruppe ausgewählt ist, die aus Kieselerde und Glimmer besteht.

10. Formbarer Stoff nach Anspruch 9, dadurch gekennzeichnet, daß der Füllstoff aus Suzoritglimmer in der Form von Blättchen eines Durchmessers zwischen 1 und 3 mm und einer Dicke von ungefähr 100 µm besteht.

11. Formbarer Stoff nach einem der Ansprüche 1 bis 9, dadurch gekennzeichnet daß die Füllstoffpartikel faserartig sind.

12. Formbarer Stoff nach Anspruch 11, dadurch gekennzeichnet, daß die Fasern eine Länge haben, die zwischen 2 und 20 mm liegt, und. einen Durchmesser, der zwischen 1 und 10 µm liegt.

13. Verfahren, um einen formbaren Stoff nach einem der vorhergehenden Ansprüche zu erhalten dadurch gekennzeichnet, daß es den Arbeitsvorgang des trockenen Mischens, ohne Erwärmung oder Druck, eines Harzpulvers und der Partikel dem Füllstoffs umfaßt.

14. Verfahren nach Anspruch 13, dadurch gekennzeichnet, daß man vor dem Arbeitsvorgang des Mischens die Größe der Partikel bestimmter Bestandteile des formbaren Stoffs justiert.

15. Verfahren nach Anspruch 13 oder 14, dadurch gekennzeichnet, daß man den Arbeitsvorgang des Mischens in einem Planetenrührwerk: ausführt.

16. Anwendung eines formbaren Stoffs nach einem der Ansprüche 1 bis 12 in einem Herstellungsprozeß von Verbundmaterial.
